# DEMANDE DE BREVET EUROPEEN

(11) **EP 0 793 192 A1**
(43) Date de publication de la demande: **03.09.1997**
(21) Numéro de dépôt: 97410027.3
(22) Date de dépôt: 25.02.1997
(51) Int. Cl.: G06K 13/08, G06K 7/08

(54) **Dispostitif de traitement de documents de format variable**

(30) Priorité: 28.02.1996 FR 9602648
(71) Demandeur: ASCOM MONETEL S.A., 07500 Guilherand-Granges (FR)
(72) Inventeur: Alessio, Lucien, 26500 Bourg Les Valence (FR)
(74) Mandataire: de Beaumont, Michel

(57) **Abrégé**

L'invention concerne un dispositif de traitement de documents à piste magnétique, dans lequel les documents peuvent avoir au moins deux largeurs différentes, comprenant un guichet d'introduction unique (10) de largeur propre à guider les documents de plus grande largeur, ce guichet comportant à une extrémité une première partie décalée (11) de manière à laisser subsister deux parois (11-1) de guidage des documents de plus faible largeur ; et un dispositif d'entraînement (13, 15, 16) à deux plans d'entraînement décalés et parallèles au guichet, un premier des plans passant par la première partie décalée (11), et le deuxième plan passant par le guichet en dehors (12) de la première partie décalée.

## Description

La présente invention concerne un appareil de traitement de documents à piste magnétique, dans lequel les documents sont entraînés de manière que leurs pistes magnétiques passent devant une tête magnétique. L'invention concerne plus particulièrement un même appareil servant à traiter des documents de formats différents.

Dans certaines applications, on souhaiterait disposer d'un appareil unique capable de traiter des documents magnétiques de formats différents. Par exemple, un contrôleur de la SNCF doit pouvoir contrôler la validité des titres de transport qui, en France, peuvent être au format "Edmondson" (ticket du métro parisien et du RER) ou au format "IATA" (billet de transport grandes lignes). Par ailleurs, le contrôleur est susceptible de recevoir des paiements (amendes, suppléments, établis-sement de nouveaux billets, etc.). Il serait commode que le contrôleur puisse contrôler les deux formats de titre de transport et accepter les paiements par carte bancaire à l'aide d'un appareil unique.

Un objet de la présente invention est de prévoir un dispositif de traitement de documents magnétiques de formats différents, qui soit particulièrement simple et peu encombrant.

Cet objet est atteint selon l'invention en prévoyant un dispositif de traitement de documents à piste magnétique, dans lequel les documents peuvent avoir au moins deux largeurs différentes, comprenant un guichet d'introduction unique de largeur propre à guider les documents de plus grande largeur, ce guichet comportant à une extrémité une première partie décalée de manière à laisser subsister deux parois de guidage des documents de plus faible largeur ; et un dispositif d'entraînement à deux plans d'entraînement décalés et parallèles au guichet, un premier des plans passant par la première partie décalée, et le deuxième plan passant par le guichet en dehors de la première partie décalée.

Selon un mode de réalisation de la présente invention, les documents peuvent avoir trois largeurs différentes, et le guichet comporte, du côté opposé à la première partie décalée, une deuxième partie décalée de manière à laisser subsister deux parois de guidage des documents de largeur médiane, le deuxième plan d'entraînement passant par cette deuxième partie décalée.

Selon un mode de réalisation de la présente invention, les documents de largeur médiane sont plus épais que les documents de plus grande largeur, et le chevauchement transversal des première et deuxième parties décalées est inférieur à l'épaisseur des documents de largeur médiane.

Selon un mode de réalisation de la présente invention, le dispositif d'entraînement comporte un rouleau moteur souple à deux diamètres différents en appui sur des galets fous.

Selon un mode de réalisation de la présente invention, le dispositif comprend une tête magnétique unique disposée pour lire les pistes magnétiques des documents de largeur médiane et des documents de plus grande largeur.

Selon un mode de réalisation de la présente invention, le dispositif comprend un guichet d'entrée et un guichet de sortie de même profil pour assurer un guidage continu des documents entre leur entrée et leur sortie.

Selon un mode de réalisation de la présente invention, les documents de plus faible largeur sont des titres de transport au format "Edmondson", les documents de plus grande largeur sont des titres de transport au format "TATA", et les documents de largeur médiane sont des cartes bancaires.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente schématiquement des éléments essentiels d'un mode de réalisation de dispositif de traitement de documents selon l'invention ;
la figure 2 illustre le passage d'un document de plus grande largeur par un guichet selon l'invention ; et
les figures 3A et 3B représentent des vues en coupe de face et de côté d'un mode de réalisation plus détaillé de dispositif de traitement de documents selon l'invention.

Un dispositif de traitement de documents magnétiques selon l'invention est du type plat, dans lequel les documents sont traités en traversant l'épaisseur de l'appareil. Un exemple de tel appareil est commercialisé par la Société Monétel sous l'appellation "Magbus LDP 100/200".

Pour traiter des documents magnétiques de formats différents, l'appareil du type plat comporte, selon un aspect de l'invention, un guichet unique pour tous les documents à traiter. L'utilisation d'un guichet unique pour des documents de formats différents pose des problèmes de guidage qui sont résolus selon un autre aspect de l'invention.

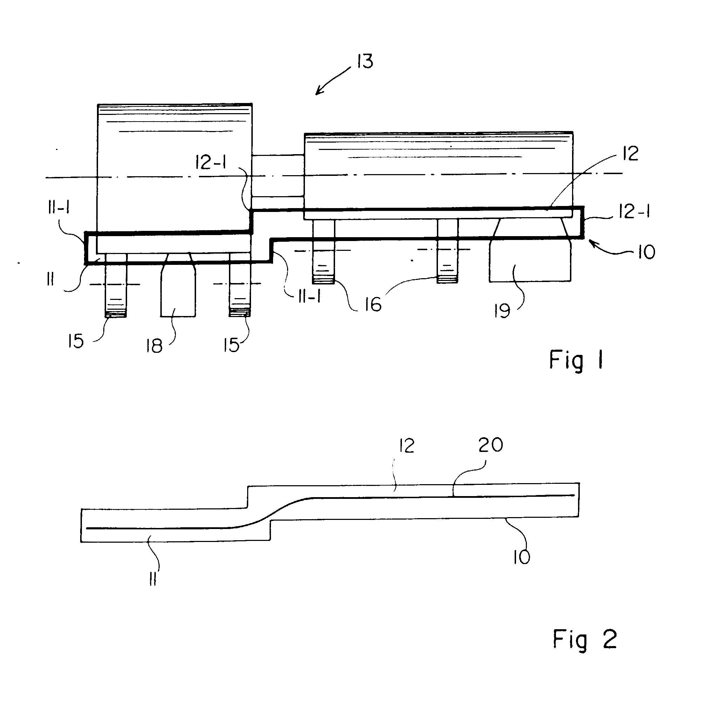

La figure 1 représente schématiquement des éléments essentiels d'un mode de réalisation de dispositif selon l'invention. Le guichet unique est désigné par 10 et est représenté horizontalement en trait gras. La largeur totale de ce guichet 10 correspond aux documents de plus grande largeur, par exemple aux billets SNCF au format IATA. En d'autres termes, les parois verticales extrêmes du guichet 10 assurent le guidage des documents de plus grande largeur.

Le guichet 10 comporte, à l'une de ses extrémités, une partie décalée vers le bas 11 de sorte à laisser subsister deux parois verticales 11-1. Ces parois 11-1 sont prévues pour assurer le guidage de documents de plus faible largeur, par exemple de tickets de métro "Edmondson".

Le guichet 10 comporte, du côté opposé à la partie décalée 11, une partie décalée vers le haut 12 qui laisse subsister deux parois verticales 12-1. Ces parois 12-1 sont prévues pour assurer le guidage de documents de largeur médiane, tels que des cartes bancaires.

Pour des raisons de clarté, les décalages des parties 11 et 12 ont été représentés de manière exagérée. En réalité, ces décalages sont juste suffisants (quelques dixièmes de millimètre) pour assurer le guidage des documents.

Pour entraîner les documents à travers le guichet 10, on utilise un système comportant un rouleau adhérent souple 13 en appui sur des galets fous, 15 au niveau de la partie décalée 11, et 16 au niveau de la partie décalée 12. Le rouleau 13 sert également à plaquer les pistes magnétiques des documents sur des têtes magnétiques correspondantes. Dans l'exemple susmentionné, une tête magnétique 18, adaptée aux tickets "Edmondson", est disposée sensiblement au centre de la partie décalée 11, entre les galets 15, et une tête magnétique 19 est disposée à une extrémité de la partie décalée 12, à côté des galets 16. La tête 19 sert avantageusement aussi bien au traitement des billets "IATA" qu'au traitement des cartes bancaires.

Pour assurer un guidage efficace des documents, il est nécessaire que ces documents soient toujours situés, au cours de leur déplacement, entre les parois de guidage associées. Ainsi, le plan d'entraînement des documents au niveau de la partie décalée 11, c'est-à-dire la zone de contact du rouleau 13 avec les galets 15, intercepte les deux parois de guidage 11-1. Pour les mêmes raisons, le plan d'entraînement au niveau de la partie décalée 12, c'est-à-dire la zone de contact du rouleau 13 avec les galets 16, intercepte les deux parois 12-1.

Ainsi, les plans d'entraînement au niveau des parties 11 et 12 doivent être décalés. Ce décalage peut être obtenu de manière particulièrement simple, comme cela est représenté, en prévoyant un rouleau 13 de diamètres différents, le grand diamètre appuyant sur les galets 15 et le petit diamètre appuyant sur les galets 16.

La figure 2 illustre un document 20 de plus grande largeur entraîné au travers du guichet 10 par le dispositif de la figure 1. Le document 20 est entraîné selon les deux plans d'entraînement décalés, ce qui provoque le fléchissement du document dans la transition entre les deux plans d'entraînement. La différence de diamètre du rouleau 13 provoque des vitesses d'entraînement différentes d'un plan d'entraînement à l'autre, et donc des frottements. Toutefois, la différence de diamètre est généralement faible, de sorte que les frottements sont négligeables.

De préférence, le chevauchement vertical des parties décalées 11 et 12 est inférieur à l'épaisseur des documents de largeur médiane, c'est-à-dire des documents que l'on insère dans la partie décalée 12 du guichet. Si les parties 11 et 12 se chevauchent horizontalement, comme cela est représenté, le chevauchement vertical peut même ne pas exister (le chevauchement vertical est négatif). Avec ce choix, les documents de largeur médiane ne peuvent être insérés que par la partie décalée 12. C'est seulement avec les documents de plus faible largeur, c'est-à-dire ceux à introduire par la partie décalée 11, qu'il faudra prendre des précautions, puisqu'ils peuvent être introduits n'importe où dans le guichet.

Dans l'exemple utilisé précédemment, les documents à insérer par la zone décalée 12 sont des cartes bancaires, et les documents de plus grande largeur sont des billets SNCF. La différence d'épaisseur entre ces deux types de document est d'environ 0,6 mm. Cette différence d'épaisseur est absorbée, par exemple, par la partie de plus faible diamètre du rouleau 13 qui est prévue pour entraîner les deux types de document. La souplesse du rouleau 13 peut être ajustée par le choix de son matériau et/ou de son diamètre. Pour un rattrapage de 0,6 mm, de bons résultats sont obtenus à l'aide d'un rouleau 13 en élastomère de 24 mm de diamètre et de dureté Shore inférieure à 40.

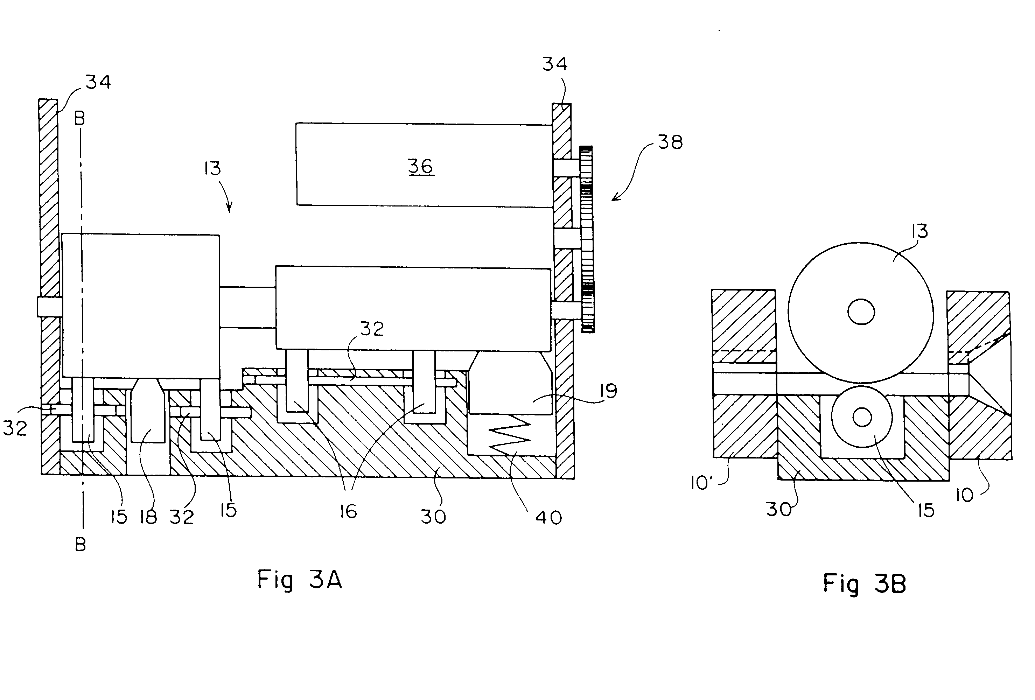

Les figures 3A et 3B représentent respectivement une vue en coupe de face et une vue en coupe de côté, selon la ligne B-B, d'un mode de réalisation plus détaillé de dispositif de traitement de documents selon l'invention. Le dispositif comprend un socle 30 dont la partie supérieure prolonge, de préférence, le profil inférieur du guichet 10. En outre, comme cela est visible à la figure 3B, un guichet de sortie 10' est disposé à l'arrière du dispositif, dans l'alignement du guichet d'entrée 10. Le guichet de sortie 10' a le même profil que le guichet d'entrée 10, ce qui assure la continuité du guidage des documents, notamment de ceux de largeur médiane. Comme cela est représenté, le guichet d'entrée 10 est précédé par une partie inclinée facilitant l'insertion des documents.

Les galets 15 et 16 sont disposés dans des évidements du socle 30 et articulés sur des axes 32 insérés dans des perçages du socle 30.

Deux plaques latérales 34 sont fixées de part et d'autre du socle 30 et permettent d'assurer le guidage du rouleau 13. Par ailleurs, sur l'une des plaques 34 est fixé un moteur 36 qui entraîne le rouleau 13 par l'intermédiaire d'un système à engrenages 38 monté sur la même plaque 34 et qui assure la réduction requise. Les guichets 10 et 10' sont fixés sur le socle 30 et les plaques 34 par vis.

Les têtes magnétiques 18 et 19 sont montées dans des évidements du socle 30. Comme cela est représenté, la tête magnétique 19 servant à lire les pistes magnétiques des cartes bancaires et des billets SNCF est sollicitée vers le rouleau 13 par un ressort 40. Le ressort 40, est choisi relativement souple, ce qui permet à la tête magnétique 19 de s'abaisser lors du traitement d'une carte bancaire épaisse en limitant les efforts de frottement entre la carte et la tête magnétique.

Dans le but de réduire l'épaisseur de l'appareil de traitement, les divers éléments (rouleau 13, galets 15 et 16, moteur 36) sont disposés dans le même plan.

De nombreuses variantes et modifications de la présente invention apparaîtront à l'homme du métier. Par exemple, le rouleau 13 peut être évidé dans les zones où il n'appuie pas sur un galet ou une tête magnétique, ce qui permet d'accroître sa souplesse. Les différences d'épaisseur des documents à traiter peuvent être absorbées par un montage sur ressorts de l'axe du rouleau 13 ou bien des axes des galets 15 et 16.

## Revendications

1. Dispositif de traitement de documents à piste magnétique, dans lequel les documents peuvent avoir au moins deux largeurs différentes, comprenant :
- un guichet d'introduction unique (10) de largeur propre à guider les documents de plus grande largeur, ce guichet comportant à une extrémité une première partie décalée (11) de manière à laisser subsister deux parois (11-1) de guidage des documents de plus faible largeur ; et
- un dispositif d'entraînement (13, 15, 16) à deux plans d'entraînement décalés et parallèles au guichet, un premier des plans passant par la première partie décalée (11), et le deuxième plan passant par le guichet en dehors (12) de la première partie décalée.

2. Dispositif de traitement de documents selon la revendication 1, caractérisé en ce que les documents peuvent avoir trois largeurs différentes, et en ce que le guichet (10) comporte, du côté opposé à la première partie décalée (11), une deuxième partie décalée (12) de manière à laisser subsister deux parois (12-1) de guidage des documents de largeur médiane, le deuxième plan d'entraînement passant par cette deuxième partie décalée.

3. Dispositif de traitement de documents selon la revendication 2, caractérisé en ce que les documents de largeur médiane sont plus épais que les documents de plus grande largeur, et en ce que le chevauchement transversal des première et deuxième parties décalées est inférieur à l'épaisseur des documents de largeur médiane.

4. Dispositif de traitement de documents selon la revendication 1 ou 2, caractérisé en ce que le dispositif d'entraînement comporte un rouleau moteur souple (13) à deux diamètres différents en appui sur des galets fous (15, 16).

5. Dispositif de traitement de documents selon la revendication 2, caractérisé en ce qu'il comprend une tête magnétique unique (19) disposée pour lire les pistes magnétiques des documents de largeur médiane et des documents de plus grande largeur.

6. Dispositif de traitement de documents selon l'une quelconque des revendications 1 à 5, caractérisé en ce qu'il comprend un guichet d'entrée (10) et un guichet de sortie (10') de même profil pour assurer un guidage continu des documents entre leur entrée et leur sortie.

7. Dispositif de traitement de documents selon l'une quelconque des revendications 2 à 6, caractérisé en ce que les documents de plus faible largeur sont des titres de transport au format "Edmondson", les documents de plus grande largeur sont des titres de transport au format "TATA", et les documents de largeur médiane sont des cartes bancaires.
